# EUROPEAN PATENT SPECIFICATION

(11) **EP 0 524 431 B1**
(45) Date of publication and mention of the grant of the patent: **25.10.1995**
(21) Application number: 92110356.0
(22) Date of filing: 19.06.1992
(51) Int. Cl.: F16H 7/12, F16F 7/06

(54) **Tensioning device for transmission belts**
Spannvorrichtung für Treibriemen
Dispositif de tension pour courroie de transmission

(30) Priority: 21.06.1991 IT MI911705
(43) Date of publication of application: 27.01.1993
(73) Proprietor: Dayco PTI S.p.A., I-64010 Colonnella (Teramo) (IT)
(72) Inventor: Cascionale, Paolo, Pescara (IT); Gayer, Melvin, Apple Valley, MN 55124 (US); Ruffini, Alberto, Chieti (IT)
(74) Representative: Mazzarella, Vincenzo, Mavipat S.a.S. di Dr.Ing. Vincenzo Mazzarella & C.

(56) References cited:
- GB-A- 322 587
- GB-A- 2 102 097
- US-A- 4 472 162
- US-A- 4 698 049

## Description

The present invention relates to a tensioning device for transmission belts.

In particular, the invention relates to a tensioning device provided with elastic means for transmitting a desired tensioning to the transmission belt, as well as friction operated damping means arranged to dampen any oscillations on the part of the belt itself.

As is known, in belt transmissions, for example of the type adopted for the operation of different devices of a motor vehicle engine, it is provided for in a number of cases that with a transmission belt, operationally engaged on respective pulleys, there is associated a tensioning device whose essential function is substantially that of conferring to the belt itself an adequate tensioning, sufficient to ensure the transmission of motion. The value of the tensioning should be kept constant independently of any extensions suffered by the belt itself due to sudden variations of the transmitted torque, to effects of wear, to temperature variations or to other reasons.

To this end, tensioning devices are used wherein an idle pulley, destined to operate on the belt, is rotatably held by a connecting arm which extends to one side of a mobile element engaged with a fixed element having the possibility of angular rotation on a predetermined axis of oscillation, parallel to the pulley's axis of rotation and perpendicular to the direction in which the belt runs. In particular, it is normally provided for that one of said elements, say, the fixed element, comprises essentially a central pivot anchored to a fixed structure, while the other element comprises essentially a collar coaxially and rotatably engaged on the central pivot.

Between the fixed element and the mobile element there operate elastic means, say, constituted by a helical torsion spring arranged coaxially with the collar and having its extremities constrained to the mobile element and to the fixed element, respectively. The spring, fitted in a condition of torsional preloading, tends to cause the mobile element to rotate on the fixed element so that the idle pulley is constantly urged against the belt, with a predetermined force.

During operation, it can occur that as a result of vibrations transmitted by the belt resonances may take place in the spring following which the pulley is subjected to excessive oscillations, with consequent variations in the tensioning of the belt itself. In order to limit this occurrence, the tensioning elements are normally provided with damping means suitable for adequately damping the oscillations of the connecting arm and of the idle pulley.

In many cases the operation of these damping means is essentially based on the friction that takes place between surfaces in reciprocal contact and in relative movement, held by the mobile element and by the fixed element, respectively.

In particular, in a known type of tensioning device, the presence is provided for of a disc made of plastic or elastomeric material, formed in the shape of an annular crown, arranged round the central pivot integral with the fixed element. This disc is compressed, following an axial preloading conferred on the spring, between a surface of the mobile element and a closing element fastened to the central pivot, so as to dampen by friction the oscillations of the mobile element on the fixed element.

To the friction provided by the disc there is added the friction generated between one or more guide bushes, having a frustum-like conformation, interposed between the central pivot and the collar supported by the mobile element.

In the US patent No. 4886484, disclosing an arrangement according to the preamble of Claim 1, the damping action is obtained by the friction generated between two or more cylindrical bushes made of plastic or elastomeric material, arranged coaxially with the central pivot and constrained to the mobile element and to the fixed element, respectively. These bushes also have the task of maintaining the mobile element guided coaxially on the fixed element.

The US patent No. 4472162 describes a tensioning device wherein the abovementioned small plate is replaced by a substantially frustum-shaped element made of elastomeric material, arranged in a condition of axial compression between a flat surface defined by the closing element integral with the central pivot and a substantially frustum-shaped surface presented by the mobile element coaxially with the central pivot. As in the previous case, to the friction provided by the elastomeric element there is added the friction generated between a cylindrical guide bush coaxially interposed between the central pivot and the collar held by the mobile element.

According to the present invention, it has beeen found that by interposing between the central pivot and the guide collar a damping bush, provided with one or more circumferential ribbings operationally engaged in corresponding annular grooves, conjugated with them, obtained in the guide collar, there is a substantial reduction in wear between the parts in reciprocal movement and, above all, extreme accuracy in guiding the mobile element on the fixed element, even in cases of wear on the damping bush following a particularly prolonged use. It has also been found that such a damping bush can also be accomplished by injection of plastic or elastomeric material directly into the collar and possibly also on the central pivot, thus accomplishing an extremely inexpensive embodiment, where there are no problems of tolerances in processing and in assemblying between the parts in relative motion.

In particular, the invention relates to a tensioning device for transmission belts, comprising: a fixed element and a mobile element reciprocally engaged by means of respective interconnection portions coaxially constrained one to the other with the possibility of reciprocal angular rotation on a given axis of oscillation; a connecting arm extending to one side from said mobile element; an idle pulley held rotatably by the connecting arm according to an axis of rotation that is substantially parallel to said axis of oscillation and arranged to operate on a transmission belt, operationally engaged on respective transmission pulleys and extending perpendicularly to the same axis of rotation; elastic means operating a rotational thrust action between the mobile element and the fixed element to maintain the idle pulley in a thrust relationship on the transmission belt; damping means operating between the fixed element and the mobile element so as to dampen the oscillations of the connecting arm on said axis of oscillation; at least one bush interposed between said interconnection portions associated with the mobile element and with the fixed element; characterized in that said damping means comprise:
a) said bush having at least one radially protruding circumferential ribbing provided with an operating surface;
b) an annular groove obtained in at least one of said interconnection portions and having a matching surface destined to be in contact with the ribbing's operating surface;
c) said circumferential ribbing of the bush engaged in said annular groove;
d) said ribbing with an operating surface elastically urged against said matching surface of the annular groove under the action of an axial thrust exerted between the mobile element and the fixed element by said elastic means;
said ribbing of the bush engaged in the annular groove of the interconnection portion producing a predetermined friction torque when following the movement of the winding arm on the axis of oscillation, a relative rotation takes place between the bush and the said interconnection portion holding the annular groove.

More in particular, the interconnection portions comprise a central pivot and a guide collar arranged coaxially on a central core, respectively, the damping bush having a substantially cylindrical conformation and being provided with a plurality of said circumferential ribbings distributed according to a given pitch, preferably ranging from 1.5 mm to 12 mm.

Preferably, the circumferential ribbings are obtained on an external cylindrical surface of the damping bush and engage in respective annular grooves, obtained in an internal cylindrical surface of said collar, the damping bush having, on one of its internal cylindrical surfaces, at least one longitudinal rib engaging in a corresponding longitudinal groove obtained in the central pivot, or whatever other asperity, say, a knurling suitable for determining the clamping in a longitudinal direction of the pivot itself with respect to the bush.

In a preferential solution, said at least one circumferential ribbing has a substantially trapeze-like crosssectional profile, and its operating surface extends according to a frustum-shaped configuration, forming an angle ranging from 25° to 60° with said axis of oscillation.

Still according to the present invention, the damping bush opposes a friction torque against the rotation of the connecting arm according to the axis of oscillation, ranging from 0.2 Kgm to 2 Kgm, corresponding to a percentage ranging from 15 to 20 of the nominal torque transmitted by said belt.

It is also advantageously provided for that the bush, accomplished in thermoplastic plastic material, be accomplished by injection directly in an engagement relationship with at least one of said interconnection portions.

Further features and advantages of the invention shall appear more evidently from the following detailed description of a preferred but not exclusive embodiment of a tensioning device for transmission belts, according to the present invention. Such description shall be made hereinafter with reference to the enclosed drawings, provided purely as an indicative, and thus not limiting, example, wherein:
- Fig. 1: shows diagrammatically a front view of the tensioning device under examination, in an operating condition on a transmission belt engaged on respective pulleys;
- Fig. 2: represents, on a scale enlarged with respect to Fig. 1, the tensioning device under examination, from the side and partially sectioned.

With reference to the enclosed figures, with 1 there is indicated as a whole a tensioning device for transmission belts, according to the present invention.

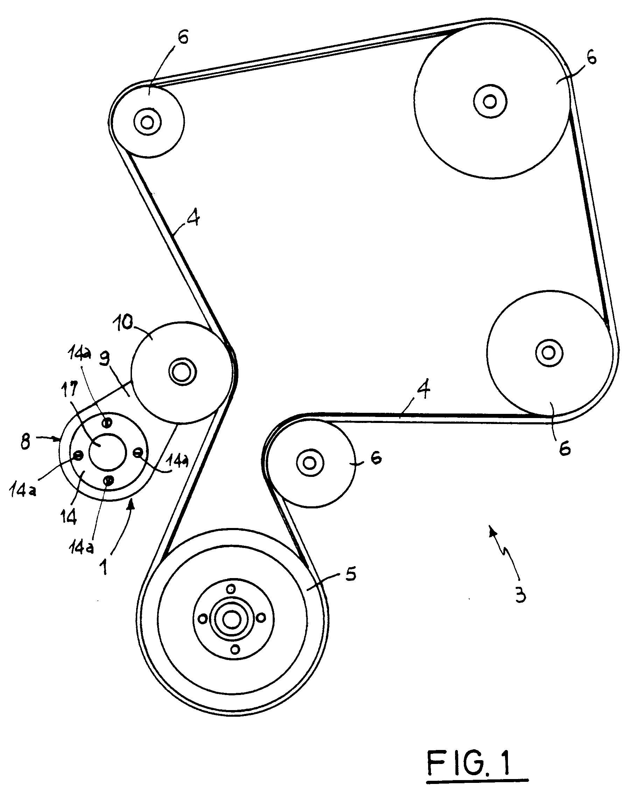

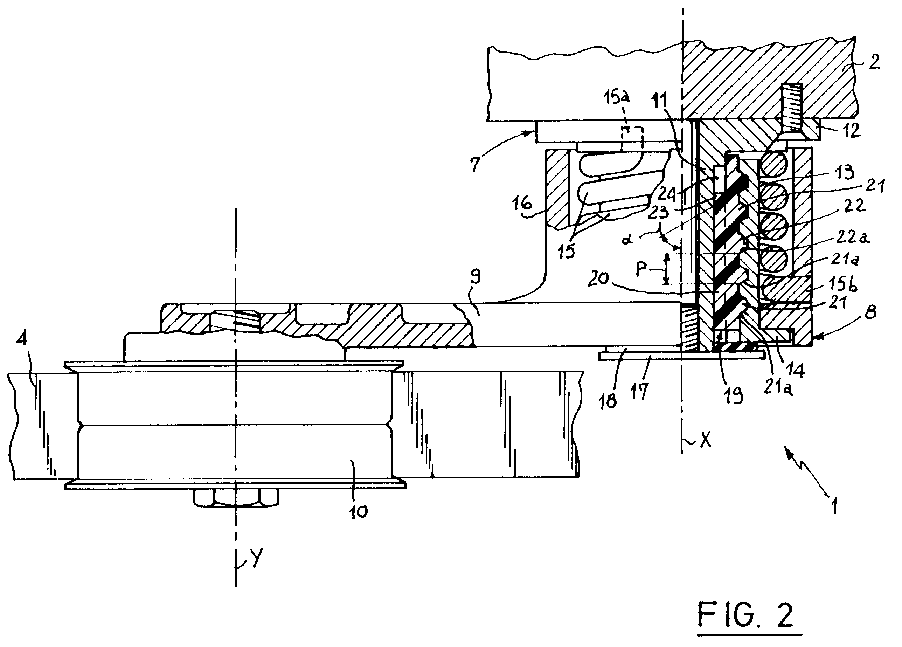

As appears clearly from Fig. 1, the tensioning device 1, mounted on a fixed structure 2 (Fig. 2), is connected to a belt transmission indicated as a whole with 3, in order to confer an adequate tensioning to a transmission belt 4 extending, along a closed line arranged on a given plane, round a driving pulley 5 and round one or more transmission pulleys 6, in order to transmit the motion from a motor to different units each connected to one of said transmission pulleys 6. The motor and the above units have not been illustrated as they are not relevant for the purposes of the invention.

With particular reference to Fig. 2, the tensioning device 1 comprises essentially a fixed element 7, rigidly constrained to the structure 2, and a mobile element 8 constrained to the fixed element 7 with the possibility of angular rotation on a given axis of oscillation "X".

From the mobile element 8 there extends to one side a connecting arm 9 which supports, rotatably according to an axis of rotation "Y" parallel to the axis of oscillation "X", an idle pulley 10 arranged to operate on the belt 4, in a section between the driving pulley 5 and the transmission pulleys 6.

It is important that the axis of rotation "Y" maintain a perpendicular, or in any case the given, orientation, with respect to the extension of the belt 4, especially in those cases wherein, as provided for in the illustrated example, the transmission belt is of the type known with the denomination "Poly-V".

The fixed element 7 and the mobile element 8 are connected together by means of two interconnection portions which, for the fixed element 7, comprise a central pivot 11 integral with a base flange 12 and, for the mobile element 8, a substantially cylindrical guide collar 13, coaxial with the central pivot 11 and fastened to the mobile element itself, say, by means of threaded elements 14a (Fig. 1) operating through a coupling flange 14.

Between the fixed element 7 and the mobile element 8 there are elastic means, which preferably comprise a helical torsion spring 15 arranged coaxially with the guide collar 13 and having a first extremity 15a constrained to the fixed element 7, at the base flange 12, and a second extremity 15b constrained to the mobile element 8.

More in particular, the torsion spring 15 is also enclosed in a tubular protective portion 16 integral with the fixed element 8, within which there is engaged said second extremity 15b.

The spring 15, conventionally preloaded by torsional elastic deformation, tends to cause the mobile element 8 to rotate on the fixed element 7, so that the idle pulley 10 is constantly urged against the transmission belt 4, to confer on the latter the desired tensioning.

According to the present invention there is also provided for that, under operating conditions, the torsion spring 15 is preloaded, in addition to the condition of torsional elastic deformation, also in the condition of axial elastic deformation, for purposes that shall appear more clearly later. The axial load of the spring 15 is contrasted by a closing plate 17 engaged, through a threaded connection, with the extremity of the central pivot 11 opposite the base flange 12 and acting on the coupling flange 14 of the guide collar 13, if necessary after the interposition of a ring 18.

To avoid that any vibrations suffered by the belt 4 may start excessive oscillations of the idle pulley 10 and/or resonance effects in the torsion spring 15, between the fixed element 7 and the mobile element 8 there are also in operation damping means 19 appropriate for suitably damping the oscillations of the connecting arm 9 on the axis "X".

According to the present invention, these damping means 19 comprise essentially at least one damping bush 20 operationally interposed between the central pivot 11 and the cylindrical collar 13.

The damping bush 20 has at least one circumferential ribbing 21 that protrudes radially from the same and operationally engages a corresponding annular groove 22, conjugated with it, obtained in at least one of the interconnection portions constituted by the central pivot 11 and by the guide collar 13, respectively. More in particular, in a preferred embodiment the interconnection bush 20 is prevented from rotating with respect to the central pivot 11, by means of one or more longitudinal ribbings 23 obtained on an internal cylindrical surface of the bush itself and each engaging in a corresponding groove 24 obtained along the pivot itself. Still with reference to the illustrated embodiment, the damping bush 20 is provided, on one of its external cylindrical surfaces, with a plurality of circumferential ribbings 21, in the specific case in the number of five, placed consecutively side by side according to a given pitch "P", preferably ranging from 1.5 mm to 12 mm and each engaging in a corresponding annular groove 22 obtained inside the guide collar 13.

Advantageously, each circumferential ribbing 21 has an operating surface 21a which, thanks to the axial preload conferred on the spring 15, is elastically urged against a corresponding matching surface 22a of the corresponding annular groove 22. In this situation, during operation, each of the circumferential ribbings 21 interacts with the corresponding annular groove 22 to create a friction torque which contrasts the rotations of the connecting arm 9 on the axis of oscillation "X" in the one and in the other direction.

Advantageously, thanks to the interference in an axial thrust relationship between the operating surfaces 21a and the matching surfaces 22a, the value of this friction torque, determined by the friction coefficient existing between the material constituting the bush 19 and the guide collar 13, by the extent of the axial force exerted by the spring 15, by the number and by the conformation of the circumferential ribbings 21, is liable to remain constant even after the possible wear of the operating surfaces and/or of the matching surfaces themselves.

According to the present invention, the value of such friction torque ranges from 0.2 Kgm to 2 Kgm corresponding to a percentage value ranging from 15% to 20% of the nominal torque that is to be transmitted by the belt 4.

It should also be noted that, as is shown in Fig. 2, the presence of several circumferential ribbings 21 confers on the external surface of the bush 20 a substantially wave-like profile. As a consequence, the area of the surfaces in a creeping contact relationship between the damping bush 21 and the guide collar 12 is appreciably increased with respect to the cylindrical or frustum-shaped bushes used in the known art. Advantageously, to such increment of surface there corresponds a lower wear of the material in the direction of the thickness, due to the effects of friction following prolonged use.

It is also advantageously provided for that the operating surface 21a of each circumferential ribbing 21 extend substantially according a frustum-like configuration, forming an angle 〈〈α〉〉 ranging from 25° to 60° with the axis of oscillation "X".

Advantageously, this frustum-like configuration, together with the axial thrust exerted by the spring 15, ensures the self-alignment of the guide collar 13, and thus of the entire mobile element 8, in a position coaxial with the axis of oscillation "X", even when some wear of the damping bush 20 takes place. It should be noted that keeping the mobile element 8 perfectly aligned with the axis "X" is basic for ensuring that the idle pulley 10 be perfectly positioned on the belt 4. In fact, to a mis-alignment of the mobile element 8 with respect to the axis "X" there would correspond an undesired oblique orientation of the axis of rotation "Y" of the pulley 10 with respect to the belt 4.

Consequently, the pulley 10 would transmit to the belt 4 components of transversal and/or non-centred forces with respect to the axis of symmetry of the belt itself, jeopardizing the life of the belt itself and the correct interaction between the same and the driven 6 and/or driving 5 pulleys. It should be considered that the presence of components of lateral forces is especially undesired, particularly when the transmission uses a belt of the Poly-V type, since the anomalous operating conditions of the belt on the corresponding driven 6 and/or driving 5 pulleys could even cause the disengagement of the belt itself from the pulleys.

Still according to the present invention, there is further provided for that each of the annular ribbings 21 has a substantially trapeze-like sectional profile. This feature, in addition to keeping constant the value of the said friction torque even after the effects of wear, makes it possible to obtain operating surfaces in the desired frustum-like configuration independently of the direction of the axial thrust exerted by the spring 15. In other words, the damping bush 20 can execute its functions in co-operation with the guide collar 13, even in the case in which with the tensioning element 1 there were to be associated a spring 15 of a type other than that described, or in the case in which the bush and the collar themselves were to be fitted, for particular construction requirements, with the coupling flange 14 arranged on the side of the fixed structure 2, that is, in a position upside-down with respect to the representation of the enclosed drawings.

According to a further characteristic of the invention there is provided for, in a preferential solution, that the damping bush 20 be accomplished in thermoplastic material, by means of injection presswork directly inside the guide collar 13 preferably made of metallic material. This makes it possible to significantly simplify the accomplishment of the tensioning element as a whole.

The bush 20 may be accomplished in polyamide resin with the possible presence of reinforcing fibres.

In particular, there are in fact eliminated, or at least appreciably reduced, all the problems of processing tolerances for obtaining a satisfactory connection between the damping bush 20 and the guide collar 13 and, particularly, the correct interaction between the operating surfaces 21a and the matching surfaces 22a.

Also eliminated are the operations necessary for the connection of the damping bush 20 in the collar 13, given that such engagement takes place directly during the accomplishment stage of the bush itself.

Obtaining the damping bush 20 and the guide collar 13 in a single piece makes the replacement of these two parts also much easier, should this operation become necessary.

Advantageously, it is also possible to include the central pivot 11 in the damping bush 20 during the accomplishment stage of the same, further substantially simplifying the accomplishment and the assembly of the tensioning device 1.

The invention thus attains several advantages with respect to the known art.

In particular, as has indeed been specified previously, the value of the friction torque, from which the capacity to dampen the oscillations imposed by the connecting arm 9 depends, is kept constant over time, unlike what takes place in the known tensioning devices wherein the wear of the surfaces in relative movement leads to variations in the values of said friction torque, as well as to unacceptable mis-alignments of the mobile element with respect to the axis of oscillation.

The substantial surface of contact between the parts in relative movement, due to the use of a plurality of circumferential ribbings, also leads to lower wear of the damping bush 20, in the direction of the thickness, with respect to the known art, where the damping action is entrusted to the friction that was generated between surfaces having a comparatively limited extension.

The accomplishment of the tensioning device as a whole is also substantially simplified, thanks to having obtained the damping bush directly in an engagement relationship with the guide collar 13 and possibly with the central pivot 11.

## Claims

1. Tensioning device for transmission belts, comprising:
- a fixed element (7) and a mobile element (8) reciprocally engaged by means of respective interconnection portions (11, 13) coaxially constrained one with respect to the other with the possibility of reciprocal angular rotation on a given axis of oscillation (X);
- a connecting arm (9) extending to one side from said mobile element (8);
- an idle pulley (10) held rotatably by the connecting arm (9) according to an axis of rotation (Y) that is substantially parallel to said axis of oscillation (X) and arranged to operate on a transmission belt (4), operationally engaged on transmission pulleys (5, 6) and extending perpendicularly to the same axis of rotation;
- elastic means (15) operating a rotational thrust action between the mobile element (8) and the fixed element (7) to maintain the idle pulley (10) in a thrust relationship on the transmission belt (4);
- damping means (19) operating between the fixed element (7) and the mobile element (8) so as to dampen the oscillations of the connecting arm (12) on said axis of oscillation;
at least one bush interposed between said interconnection portions (11, 13) associated with the mobile element and with the fixed element; characterized in that said damping means (10) comprise:
a) said bush having at least one radially protruding circumferential ribbing provided with an operating surface (21a);
b) an annular groove obtained in at least one of said interconnection portions (11, 13) and having a matching surface (22a) destined to be in contact with said operating surface of the ribbing;
c) said circumferential ribbing of the bush engaged in said annular groove;
d) said ribbing with an operating surface (21a) elastically urged against said matching surface (22a) of the annular groove (22) under the action of an axial thrust exerted between the mobile element (8) and the fixed element (7) by said elastic means;
said ribbing of the bush engaged in the annular groove of the interconnection portion producing a predetermined friction torque when following the movement of the connecting arm on the axis of oscillation "X", a relative rotation takes place between the bush (20) and the said interconnection portion (11, 13) holding the annular groove.

2. Tensioning device according to claim 1, characterised in that said damping bush (20) has a substantially cylindrical conformation, and is provided with a plurality of said circumferential ribbings (21) distributed according to a given pitch.

3. Tensioning device according to claim 2, characterised in that said interconnection portions comprise a central pivot (11) and a guide collar (13), respectively, arranged coaxially on the central pivot (11).

4. Tensioning device according to claim 3, characterised in that said circumferential ribbings (21) are obtained on an external cylindrical surface of the damping bush (20) and engage in respective annular grooves (22), obtained in an internal cylindrical surface of said collar (13), said central pivot (11) being clamped in the rotational direction with respect to the damping bush (20).

5. Tensioning device according to claim 4, characterised in that said damping bush (20), on one of its internal cylindrical surfaces, has at least one longitudinal rib (23) engaging in a corresponding longitudinal groove (24) obtained in the central pivot (11), to determine the clamping in the rotational direction of the pivot itself with respect to the bush (20).

6. Tensioning device according to claim 1, characterised in that the operating surface of said at least one circumferential ribbing (21) extends along a frustum-shaped configuration, forming an angle ranging from 25° to 60° with said axis of oscillation "X".

7. Tensioning device according to claim 1, characterised in that said at least one circumferential ribbing (21) has a substantially trapeze-like sectional profile.

8. Tensioning device according to claim 2, characterised in that said circumferential ribbings (21) are reciprocally spaced according to a pitch ranging from 1.5 mm to 12 mm.

9. Tensioning device according to claim 1, characterised in that said damping bush (20) opposes a friction torque against the rotation of the connecting arm (9) on the axis of oscillation (X), ranging from 0.2 Kgm to 2 Kgm.

10. Tensioning device according to claim 1, characterised in that said damping bush (20) opposes a friction torque against the rotation of the connecting arm (9) on the axis of oscillation (X), ranging from 15% to 20% of the nominal torque transmitted by said belt (4).

11. Tensioning device according to claim 1, characterized in that said damping bush (20) is accomplished in thermoplastic material.

12. Tensioning device according to claim 1, characterized in that said damping bush (20) is produced by injection presswork directly in an engagement relationship with at least one of said interconnection portions (11, 13).

13. Tensioning device according to claim 1, characterized in that said elastic means comprise at least one helical torsion spring (15), arranged coaxially with respect to said axis of oscillation "X" and operationally engaged between the fixed element (7) and the mobile element (8) in a relationship of torsional and axial elastic deformation.

14. Belt transmission, comprising a transmission belt (4) operationally engaged between at least one driving pulley (5) and at least one transmission pulley (6), characterized in that on said belt (4) there is a tensioning device (1) accomplished according to claim 1.

15. Belt transmission according to claim 1, characterised in that said transmission belt (4) is of the "Poly-V" type.

## Patentansprüche

1. Spannvorrichtung für Transmissionsriemen
- mit einem feststehenden Element (7) und einem beweglichen Element (8), die durch entsprechende Verbindungsabschnitte (11, 13) wechselseitig in Eingriff stehen, wobei die Verbindungsabschnitte (11, 13) koaxial zueinander mit der Möglichkeit einer wechselseitigen Winkeldrehung auf einer gegebenen Schwenkachse (X) koaxial eingespannt sind,
- mit einem verbindungsarm (9), der sich von dem beweglichen Element (8) aus zu einer Seite erstreckt,
- mit einer Leerlaufscheibe (10), die von dem Verbindungsarm (9) entsprechend einer Drehachse (Y), die im wesentlichen parallel zur Schwenkachse (X) ist, drehbar gehalten und so angeordnet ist, daß sie auf einen wirkungsmäßig an Transmissionsscheiben (5, 6) angreifenden Transmissionsriemen (4) einwirkt, und die sich senkrecht zur gleichen Drehachse erstreckt,
- mit einer elastischen Einrichtung (15), die eine Drehandrückwirkung zwischen dem beweglichen Element (8) und dem feststehenden Element (7) ausübt, um die Leerlaufscheibe (10) in einer Andrückbeziehung an dem Transmissionsriemen (4) zu halten,
- mit einer Dämpfeinrichtung (19), die zwischen dem feststehenden Element (7) und dem beweglichen Element (8) so wirkt, daß die Schwenkbewegungen des Verbindungsarms (12) auf der Schwenkachse gedämpft werden, und
- mit wenigstens einer zwischen den Verbindungsabschnitten (11, 13) angeordneten, dem beweglichen Element und dem feststehenden Element zugeordneten Büchse,
dadurch gekennzeichnet, daß die Dämpfeinrichtung (10)
a) die Büchse mit wenigstens einer radial vorstehenden umfangsseitigen Rippenanordnung, welche mit einer Arbeitsfläche (21a) versehen ist, und
b) eine Ringnut aufweist, die in wenigstens einem der Verbindungsabschnitte (11, 13) ausgebildet ist und eine zusammenpassende Fläche (22a) hat, die für den Kontakt mit der Arbeitsflache der Rippenanordnung bestimmt ist,
c) wobei die umfangsseitige Rippenanordnung der Büchse in Eingriff mit der Ringnut steht,
d) wobei die Rippenanordnung mit der Arbeitsfläche (21a) elastisch gegen die damit zusammenpassende Fläche (22a) der Ringnut (22) unter der Wirkung eines axialen Drucks gedrückt wird, der zwischen dem beweglichen Element (8) und dem feststehenden Element (7) durch die elastische Einrichtung ausgeübt wird,
wobei die Rippenanordnung der Büchse, die in die Ringnut des Verbindungsabschnitts eingreift, ein vorgegebenes Reibmoment erzeugt, wenn sie der Bewegung des Verbindungsarms auf der Schwenkachse "X" folgt und wobei eine Relativdrehung zwischen der Büchse (20) und dem Verbindungsabschnitt (11, 13) einsetzt, der die Ringnut trägt.

2. Spannvorrichtung nach Anspruch 1, dadurch gekennzeichnet, daß die dämpfende Büchse (20) eine in wesentlichen zylindrische Form hat und mit einer Vielzahl von Umfangsrippen (21) vergehen ist, die entsprechend einer vorgegebenen Teilung verteilt sind.

3. Spannvorrichtung nach Anspruch 2, dadurch gekennzeichnet, daß die Verbindungsabschnitte einen zentralen Zapfen (11) und einen Führungsbund (13) aufweisen, die jeweils koaxial an dem zentralen Zapfen (11) angeordnet sind.

4. Spannvorrichtung nach Anspruch 3, dadurch gekennzeichnet, daß die Umfangsrippen (21) an einer äußeren Zylinderfläche der dämpfenden Büchse (20) ausgebildet sind und in entsprechende Ringnuten (22) eingreifen, die in einer inneren Zylinderfläche des Bundes (13) ausgebildet sind, wobei der zentrale Zapfen (11) in der Drehrichtung bezüglich der dämpfenden Büchse (20) geklemmt ist.

5. Spannvorrichtung nach Anspruch 4, dadurch gekennzeichnet, daß die dämpfende Büchse (20) an einer ihrer inneren zylindrischen Flächen wenigstens eine Längsrippe (23) hat, die in eine entsprechende Längsnut (24) eingreift, die in dem zentralen Zapfen (11) ausgebildet ist, um die Klemmung in der Drehrichtung des Zapfens selbst bezüglich der Büchse (20) festzulegen.

6. Spannvorrichtung nach Anspruch 1, dadurch gekennzeichnet, daß die Arbeitsfläche wenigstens einer umfangsseitigen Rippenanordnung (21) sich längs einer Kegelstumpfform erstreckt, die mit der Schwenkachse "X" einen Winkel im Bereich 25° bis 60° bildet.

7. Spannvorrichtung nach Anspruch 1, dadurch gekennzeichnet, daß wenigstens eine umfangsseitige Rippenanordnung (21) im Querschnitt ein im wesentlichen trapezförmiges Profil hat.

8. Spannvorrichtung nach Anspruch 2, dadurch gekennzeichnet, daß die Umfangsrippenanordnung (21) wechselweise im Abstand entsprechend einer Teilung im Bereich von 1,5 mm bis 12 mm angeordnet ist.

9. Spannvorrichtung nach Anspruch 1, dadurch gekennzeichnet, daß die dämpfende Büchse (20) der Drehung des Verbindungsarms (9) auf der Schwenkachse (X) ein Drehmoment entgegensetzt, das im Bereich von 0,2 Meterkilogramm bis zwei Meterkilogramm liegt.

10. Spannvorrichtung nach Anspruch 1, dadurch gekennzeichnet, daß die dämpfende Büchse (20) der Drehung des Verbindungsarms (9) auf der Schwenkachse (X) ein Reibmoment entgegengesetzt, das im Bereich von 15 % bis 20 % des von dem Riemen (4) übertragenen Nominaldrehmoments liegt.

11. Spannvorrichtung nach Anspruch 1, dadurch gekennzeichnet, daß die dämpfende Büchse (20) aus thermoplastischem Material hergestellt ist.

12. Spannvorrichtung nach Anspruch 1, dadurch gekennzeichnet, daß die dämpfende Büchse (20) durch Spritzpressen direkt in einer Eingriffsbeziehung mit wenigstens einem der Verbindungsabschnitte (11, 13) hergestellt wird.

13. Spannvorrichtung nach Anspruch 1, dadurch gekennzeichnet, daß die elastische Einrichtung wenigstens eine wendelförmige Torsionsfeder (15) aufweist, die koaxial bezüglich der Schwenkachse "X" angeordnet ist und zwischen das feststehende Element (7) und das bewegliche Element (8) in einer Beziehung für eine elastische Torsions- und Axialverformung wirkungsmäßig eingreift.

14. Riementransmission mit einem Transmissionsriemen (4), der zwischen wenigstens eine treibende Scheibe (5) und wenigstens eine Transmissionsscheibe (6) in Wirkungseingriff gesetzt ist, dadurch gekennzeichnet, daß an dem Riemen (4) eine nach Anspruch 1 hergestellte Spannvorrichtung (1) vorhanden ist.

15. Riementransmission nach Anspruch 1, dadurch gekennzeichnet, daß der Transmissionsriemen (4) in "Poly-V"-Bauweise ausgeführt ist.

## Revendications

1. Dispositif tendeur pour courroies de transmission, comprenant :
- un élément fixe (7) et un élément mobile (8) en engagement réciproque au moyen de parties d'interconnexion respectives (11, 13) fixées coaxialement l'une par rapport à l'autre avec faculté de rotation angulaire réciproque sur un axe donné d'oscillation (X),
- un levier de liaison (9) s'étendant d'un côté dudit élément mobile (8),
- une poulie folle (10) maintenue avec faculté de rotation par le levier de liaison (9) suivant un axe de rotation (Y) qui est sensiblement parallèle audit axe d'oscillation (X) et agencée pour agir sur une courroie de transmission (4), engagée de manière fonctionnelle sur des poulies de transmission (5, 6) et s'étendant perpendiculairement au même axe de rotation,
- des moyens élastiques (15) exerçant une action de poussée en rotation entre l'élément mobile (8) et l'élément fixe (7) afin de maintenir la poulie folle (10) en relation de poussée sur la courroie de transmission (4),
- des moyens d'amortissement (19) agissant entre l'élément fixe (7) et l'élément mobile (8) de manière à amortir les oscillations du levier de liaison (12) sur ledit axe d'oscillation,
- au moins une douille interposée entre lesdites parties d'interconnexion (11, 13), caractérisé en ce que lesdits moyens d'amortissement (10) comprennent :
a) ladite douille comportant au moins une nervure circonférentielle saillant radialement munie d'une surface fonctionnelle (21a),
b) une rainure annulaire ménagée dans l'une au moins desdites parties d'interconnexion (11, 13) et comportant une surface appariée (22a) destinée à être en contact avec ladite surface fonctionnelle de la nervure,
c) ladite nervure circonférentielle de la douille engagée dans ladite rainure annulaire,
d) ladite nervure avec une surface fonctionnelle (21a) poussée élastiquement contre ladite surface appariée (22a) de la rainure annulaire (22) sous l'action d'une poussée axiale exercée entre l'élément mobile (8) et l'élément fixe (7) par lesdits moyens élastiques, ladite nervure de la douille engagée dans la rainure annulaire de la partie d'interconnexion produisant un couple de friction prédéterminé lorsque, suite au mouvement du levier de liaison sur l'axe d'oscillation "X", une rotation relative a lieu entre la douille (20) et ladite partie d'interconnexion (11, 13) comportant la rainure annulaire.

2. Dispositif tendeur selon la revendication 1, caractérisé en ce que ladite douille d'amortissement (20) est de conformation sensiblement cylindrique et est munie d'une pluralité desdites nervures circonférentielles (21) réparties suivant un pas donné.

3. Dispositif tendeur selon la revendication 2, caractérisé en ce que lesdites parties d'interconnexion comprennent un pivot central (11) et une bague de guidage (13), respectivement, disposée de manière coaxiale sur le pivot central (11).

4. Dispositif tendeur selon la revendication 3, caractérisé en ce que lesdites nervures circonférentielles (21) sont ménagées sur une surface cylindrique extérieure de la douille d'amortissement (20) et s'engagent dans des rainures annulaires respectives (22) ménagées dans une surface cylindrique intérieure de ladite bague (13), ledit pivot central (11) étant serré dans le sens de rotation par rapport à la douille d'amortissement (20).

5. Dispositif tendeur selon la revendication 4, caractérisé en ce que ladite douille d'amortissement (20), sur l'une de ses surfaces cylindriques intérieures, comporte au moins une nervure longitudinale (23) s'engageant dans une rainure longitudinale correspondante (24) ménagée dans le pivot central (11), afin de déterminer le serrage dans le sens de rotation du pivot lui-même par rapport à la douille (20).

6. Dispositif tendeur selon la revendication 1, caractérisé en ce que la surface fonctionnelle de ladite au moins une nervure circonférentielle (21) s'étend suivant une configuration tronconique, formant un angle compris entre 25° et 60° avec ledit axe d'oscillation "X".

7. Dispositif tendeur selon la revendication 1, caractérisé en ce que ladite au moins une nervure circonférentielle (21) présente un profil en coupe sensiblement en forme de trapèze.

8. Dispositif tendeur selon la revendication 2, caractérisé en ce que lesdites nervures circonférentielles (21) sont espacées réciproquement suivant un pas compris entre 1,5 mm et 12 mm.

9. Dispositif tendeur selon la revendication 1, caractérisé en ce que ladite douille d'amortissement (20) oppose un couple de friction à la rotation du levier de liaison (9) sur l'axe d'oscillation (X) compris entre 0,2 Kgm et 2 Kgm.

10. Dispositif tendeur selon la revendication 1, caractérisé en ce que ladite douille d'amortissement (20) oppose un couple de friction à la rotation du levier de liaison (9) sur l'axe d'oscillation (X) compris entre 15 % et 20 % du couple nominal transmis par ladite courroie (4).

11. Dispositif tendeur selon la revendication 1, caractérisé en ce que ladite douille d'amortissement (20) est réalisée en matériau thermoplastique.

12. Dispositif tendeur selon la revendication 1, caractérisé en ce que ladite douille d'amortissement (20) est réalisée par moulage par injection et pression directement en relation d'engagement avec l'une au moins desdites parties d'interconnexion (11, 13).

13. Dispositif tendeur selon la revendication 1, caractérisé en ce que lesdits moyens élastiques comprennent au moins un ressort de torsion hélicoïdal (15), disposé coaxialement par rapport audit axe d'oscillation "X" et engagé de manière fonctionnelle entre l'élément fixe (7) et l'élément mobile (8) en relation de déformation élastique en torsion et axiale.

14. Transmission par courroie, comprenant une courroie de transmission (4) engagée de manière fonctionnelle entre au moins une poulie d'entraînement (5) et au moins une poulie de transmission (6), caractérisée en ce que sur ladite courroie (4) se trouve un dispositif tendeur (1) réalisé conformément à la revendication 1.

15. Transmission par courroie selon la revendication 1, caractérisée en ce que ladite courroie de transmission (4) est du type "Poly-V".
